# EUROPEAN PATENT SPECIFICATION

(11) **EP 2 267 288 B1**
(45) Date of publication and mention of the grant of the patent: **06.05.2020**
(21) Application number: 10251077.3
(22) Date of filing: 11.06.2010
(51) Int. Cl.: F02C 7/27, F01D 1/06, F01D 1/16, F02C 3/13, F02C 3/10, B64C 27/14

(54) **GAS TURBINE ENGINE AND METHOD OF STARTING THE SAME**
GASTURBINE UND VERFAHREN ZUM STARTEN DAVON
TURBINE À GAZ ET SON PROCÉDÉ DE DÉMARRAGE

(30) Priority: 25.06.2009 US 491310
(43) Date of publication of application: 29.12.2010
(73) Proprietor: Hamilton Sundstrand Corporation, Charlotte, NC 28217 (US)
(72) Inventor: Veilleux, Leo J., Wethersfield, CT 06109 (US)
(74) Representative: Dehns

(56) References cited:
- EP-A1- 1 267 062
- EP-A2- 1 331 379
- WO-A1-90/14511
- CH-A- 313 450
- GB-A- 716 263
- JP-A- H01 249 925
- JP-A- S58 126 436
- US-A- 3 085 396
- US-A- 5 136 837

## Description

### BACKGROUND

The present disclosure relates to a gas turbine engine, and more particularly to a start system therefor.

Aircraft powered by gas turbine engines such as a rotorcraft often utilizes pneumatic or electric starter motors which operate through an accessory gearbox. A rotor accessory gearbox also mounted on the engine housing is driven by a shaft from the power output shaft which generally operates at a constant rpm. In an aircraft such as a rotorcraft, accessories typically connected to the rotor accessory gearbox include an oil boost pump, an engine overspeed governor and a tachometer generator. A rotor accessory gearbox is typically mounted on the engine housing and is connected to the stage through a shaft and gear train. In an aircraft such as a rotorcraft, accessories typically connected to the rotor accessory gearbox include an engine main oil pump, fuel control unit, starter-generator, and gas producer generator.

As the starter motor drives the accessory gearbox, the accessory gearbox motors the gas turbine engine. The accessory gearbox also turns the engine alternator so that electrical current is supplied to the engine electrical system. Ignition will continue until either the engine ignition switch is moved to off or starter motor dropout occurs.

Although effective, this arrangement may utilize a relatively significant amount of packaging space and be disadvantageous from a weight perspective due in part to the multiple starter motors and accessory gearbox components.

EP 1331379, US 5,136,837, JP H01 249925 and JP 558 126436 are all concerned with starter systems for turbine engines.

### SUMMARY

A gas turbine engine powerplant system according to an exemplary aspect of the present disclosure is provided as claimed in claim 1 and includes an engine package with a high spool and a low spool; a power source which generates air and a nozzle system in fluid communication with the power source, the nozzle system being operable to direct air toward said high spool to spin-up said high spool.

A method of starting a gas turbine engine powerplant system with a high spool and a low spool according to an exemplary aspect of the present disclosure is provided as claimed in claim 10 and includes supplying air to a nozzle system of an engine package to spin-up the high spool to light off speed and driving an accessory system with only the low spool once light off is achieved.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a general perspective view of an exemplary rotary wing aircraft embodiment for use with the present disclosure;
Figure 2 is a schematic view of a drive system of a rotary-wing aircraft;
Figure 3 is a schematic block diagram view of one non-limiting embodiment of a start system;
Figure 4 is a schematic view of nozzle system located within a compressor case section to drive the high spool to light-off;
Figure 5 is a schematic block diagram view of an accessory system; and
Figure 6 is a schematic block diagram view of another non-limiting embodiment of a start system.

### DETAILED DESCRIPTION

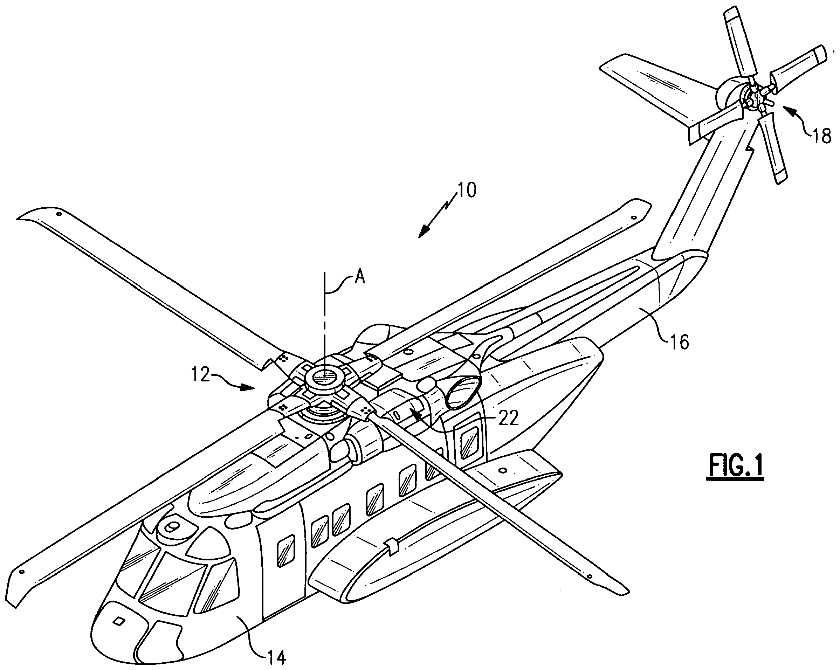

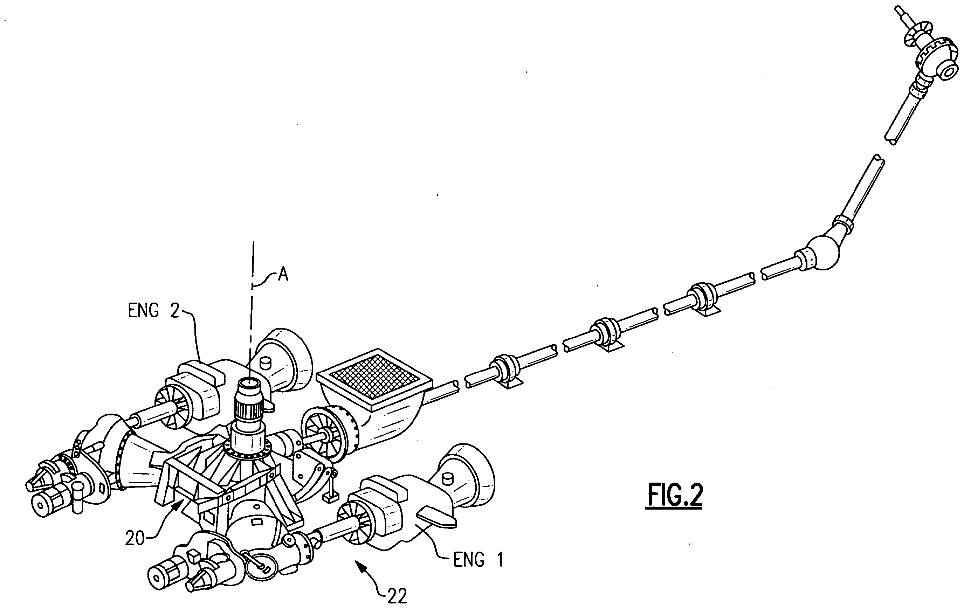

Figure 1 schematically illustrates a rotary-wing aircraft 10 having a main rotor system 12. The aircraft 10 includes an airframe 14 having an extending tail 16 which mounts an anti-torque system 18. The main rotor system 12 is driven about an axis of rotation A through a main rotor gearbox (MGB) 20 by a multi-engine powerplant system 22 - here having two engine packages ENG1, ENG2 (Figure 2). The multi-engine powerplant system 22 generates the power available for flight operations and couples such power to the main rotor system 12 and the anti-torque system 18 through the MGB 20. Although a particular helicopter configuration is illustrated and described in the disclosed embodiment, other configurations and/or machines, such as fixed wing aircraft, high speed compound rotary-wing aircraft with supplemental translational thrust systems, turbo-props and tilt-rotor aircraft applications will also benefit herefrom.

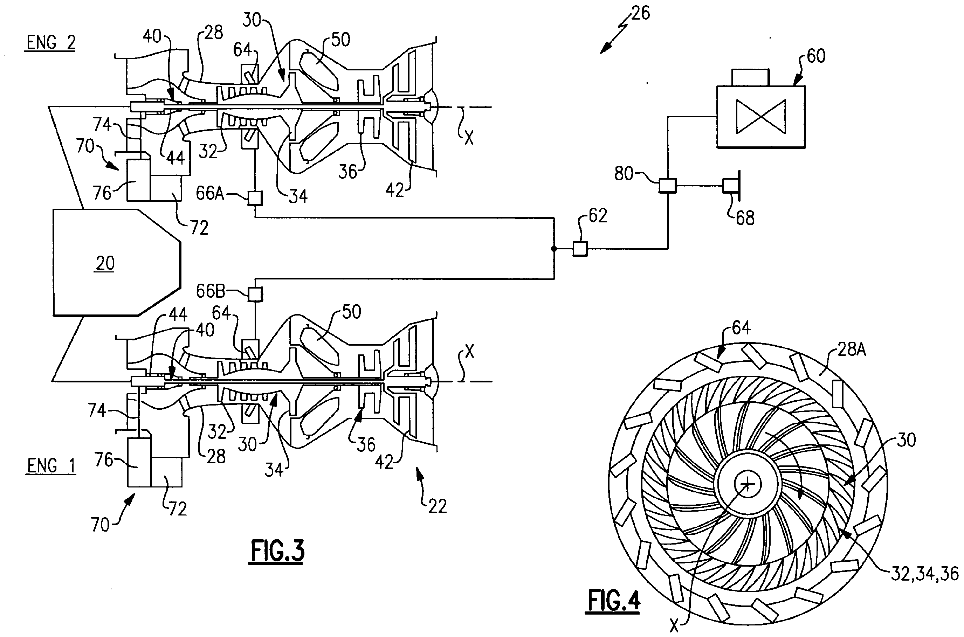

Referring to Figure 3, a start system 26 for the multi-engine powerplant system 22 is illustrated as a schematic block diagram. Each engine package ENG1, ENG2 in this non-limiting embodiment is a free power type turbo shaft engine in which engine operation involves two mechanically independent internal stages. While a particular two spool turbo shaft engine package is schematically illustrated in the disclosed non-limiting embodiment, it should be understood that the disclosure is applicable to other gas turbine engine configurations.

Each engine package ENG1, ENG2 includes an engine case 28 that houses a high spool 30 and a low spool 40 that rotate about an engine axis of rotation X; typically in opposite directions. In one non-limiting engine embodiment, the high spool 30 includes an axial flow compressor rotor 32, a centrifugal flow compressor rotor 34 and an axial high pressure turbine 36. The low spool 40 includes a power turbine rotor 42 and an output shaft 44 which is coupled to the MGB 20. A combustor 50 is generally arranged between the centrifugal flow compressor rotor 34 and the axial high pressure turbine 36.

The two engine packages ENG1, ENG2 are in fluid communication with a power source 60 such as an auxiliary power unit (APU), electrical air cycle machine (eACM) or other power source which provides an on-board source of air and auxiliary electrical power. Alternatively, or in addition thereto, air may be obtained through engine start and cross-bleed engine valves 66A, 66B, an external source port 68 or others. The cross-bleed engine valves 66A, 66B or the external source port 68 is selected through position of a ground/air selector valve 80. Cross-bleed engine starts may be provided when one engine package ENG1, ENG2 is operating and the other engine package ENG2, ENG1 is then started with bleed-air from the operating engine package ENG1, ENG2. The external source port 68 provides an attachment point for a bleed-air line from an external source such as a pneumatic cart or another aircraft. Either external start pneumatic port 68 or power source 60 can be selected with the ground/air selector valve 80.

The external start pneumatic port 68 or power source 60 provides air through an isolation valve 62 to a nozzle system 64 in the engine case structure 28. The isolation valve 62 selectively permits air flow between either of the two engine packages ENG1, ENG2 through selection of cross-engine start through position of the cross-bleed engine valves 66A, 66B. The isolation valve 62 will also shut off flow from the power source 60 or external source port 68 for the cross-bleed engine start.

The nozzle system 64 may be located within a case section 28A of the engine case structure 28 and arranged therearound to drive the high spool 30 to light-off speed and beyond. That is, the nozzle system 64 may be arranged around axis X and directed toward the desired rotational direction of the axial flow compressor rotor 32, the centrifugal flow compressor rotor 34, the axial high pressure turbine 36 or a combination thereof to spin-up the high spool 30 (Figure 4). The nozzle system 64 includes a multiple of nozzles 66A, 66B arranged completely around the engine case section 28A. In one non-limiting embodiment, the nozzle system 64 may provide 40 psi (276 kPa) starter air at 1pps (0.45 kg/s).

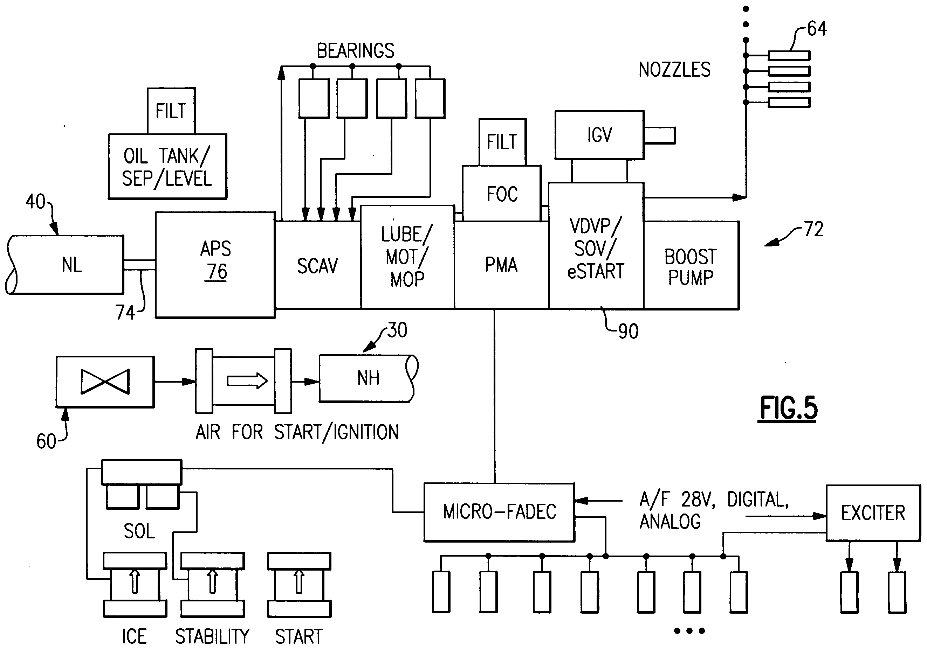

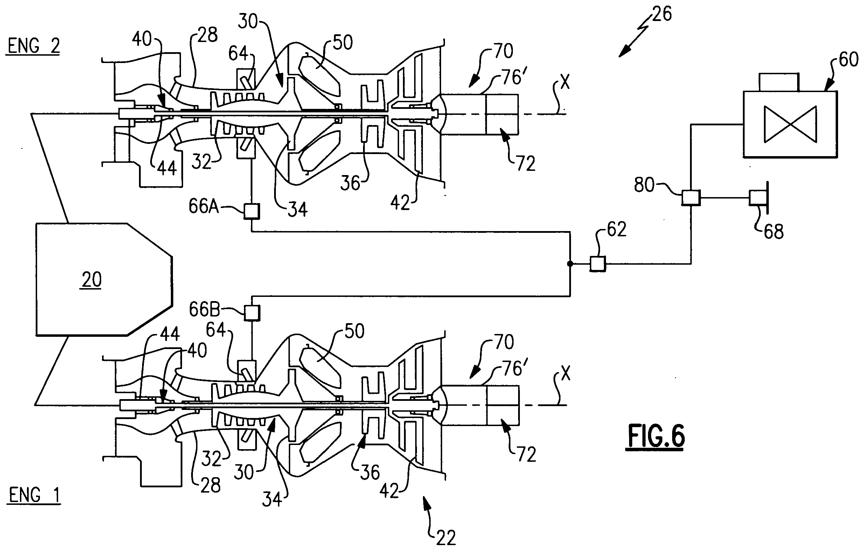

An accessory system 70 which includes a multiple of accessory components 72 such as, but not limited to, an engine main oil pump, a fuel control unit, a generator, a primary ignition system, a gas producer generator, an oil boost pump, an engine overspeed governor, tachometer generator, and others such that all accessory components 72 are driven by the low spool 40 so as to eliminate load on the high spool 30 (Figure 5). An accessory gearbox 76 may be located on the engine housing 28 in a radial direction from axis X such that the accessory gearbox 76 is driven by the low spool 40 through a shaft 74. Alternatively, the accessory components 72 are driven by an accessory gearbox 76' mounted along axis X downstream of the power turbine rotor 42 such that the accessory gearbox 76' is driven directly by the output shaft 44 (Figure 6).

Fuel at start may be bootstrapped by an electric start pump 90 (Figure 5) driven by the power source 60 until the low spool 40 supports the main fuel pump. Electrical current may be supplied to the ignition exciter through an electrical source such as an alternator driven directly by the power source 60. It should be understood that other fuel supply bootstrap and ignition arrangements such as a battery which provides on-board electrical power may be alternatively or additionally provided until the low spool 40 spins-up to a speed which supports the main fuel pump and the primary ignition system.

In operation, the power source 60 supplies air to the nozzle system 64 of engine package ENG1 to drive the high spool 30 to lightoff speed and beyond. Concurrent therewith, fuel is bootstrapped by the start pump 90 driven by the power source 60 until the low spool 40 supports the boost pump and main fuel pump. Once light-off occurs for engine package ENG1, the isolation valve 62 is positioned so that engine package ENG2 is spun-up through cross-bleed from ENG1. Alternately, the isolation valve 62 is positioned to directly supplies air to the nozzle system 64 of engine package ENG2 to drive the high spool 30 of engine package ENG2 to light-off speed.

Such an arrangement eliminates need for air or electric starter for each engine package and reduces the size and weight of high spool 30. Weight savings of 20% have been achieved over current systems as well as concomitant cost and reliability improvements.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described.

## Claims

1. A gas turbine engine powerplant system comprising:
an engine package (END1,ENG2) with a high spool (30) and a low spool (40); and
a start system (26) comprising:
a power source (60) which generates air;
an engine case structure (28); and
a nozzle system (64) in the engine case structure in fluid communication with said power source, said nozzle system including a multitude of nozzles circumferentially spaced around the high spool and directed toward a desired direction of the high spool at a rotor (32, 34, 36) of the high spool to spin-up the high spool; wherein the multitude of nozzles are arranged completely around the engine case structure (28);
wherein said high spool (30) includes an axial flow compressor rotor (32), and said nozzle system (64) directs said air toward said axial flow compressor rotor; and
wherein said high spool (30) includes a centrifugal flow compressor rotor (34), and said nozzle system (64) directs said air toward said centrifugal flow compressor rotor.

2. The system as recited in claim 1, wherein said power source (60) is an auxiliary power unit.

3. The system as recited in claim 1, wherein said power source (60) is an electrical air cycle machine.

4. The system as recited in any preceding claim, wherein said high spool (30) includes an axial high pressure turbine (36), and said nozzle system (64) directs said air toward said axial high pressure turbine.

5. The system as recited in any preceding claim, wherein said low spool (40) includes a power turbine rotor (42).

6. The system as recited in claim 5, wherein said power turbine rotor (42) drives an output shaft (44).

7. The system as recited in any preceding claim, further comprising an accessory system (70) driven by said low spool.

8. The system as recited in any preceding claim, wherein said nozzle system (64) is mounted within an engine case structure (28).

9. The system as recited in claim 8, wherein said nozzle system (64) is arranged at least partially around an engine axis of rotation (X).

10. A method of starting a gas turbine engine powerplant system according to claim 1 with a high spool (30) and a low spool (40) comprising:
supplying air to a nozzle system (64) in an engine case structure (28) of an engine package to spin-up the high spool to light off speed, wherein said nozzle system includes a multitude of nozzles circumferentially spaced around the high spool, the multitude of nozzles directed toward a desired rotational direction of the high spool at a rotor (32, 34, 36) of the high spool to spin-up the high spool; and
driving an accessory system (70) with only the low spool once light off is achieved; wherein the multitude of nozzles are arranged completely around the engine case structure (28).

11. A method as recited in claim 10, further comprising starting a second engine package with crossbleed from the engine package after the engine package completes start.

## Patentansprüche

1. Gasturbinentriebwerksystem, Folgendes umfassend:
ein Modulpaket (END1, ENG2) mit einer hohen Spule (30) und einer niedrigen Spule (40); und
ein Startsystem (26), das Folgendes umfasst:
eine Leistungsquelle (60), die Luft erzeugt;
eine Triebwerksgehäusestruktur (28); und
ein Düsensystem (64) in der Triebwerksgehäusestruktur, das in Fluidverbindung mit der Leistungsquelle steht, wobei das Düsensystem eine Vielzahl von Düsen beinhaltet, die in Umfangsrichtung um die hohe Spule beabstandet sind und in eine gewünschte Richtung der hohen Spule an einem Rotor (32, 34, 36) der hohen Spule ausgerichtet sind, um die hohe Spule aufzuspulen; wobei die Vielzahl von Düsen vollständig um die Triebwerksgehäusestruktur (28) angeordnet sind;
wobei die hohe Spule (30) einen Axialströmungskompressorrotor (32) beinhaltet, und das Düsensystem (64) die Luft zu dem Axialströmungskompressorrotor leitet; und
wobei die hohe Spule (30) einen Zentrifugalströmungskompressorrotor (34) beinhaltet, und das Düsensystem (64) die Luft zu dem Zentrifugalströmungskompressorrotor leitet.

2. System nach Anspruch 1, wobei die Leistungsquelle (60) ein Hilfstriebwerk ist.

3. System nach Anspruch 1, wobei die Leistungsquelle (60) eine elektrische Luftkreislaufmaschine ist.

4. System nach einem der vorhergehenden Ansprüche, wobei die hohe Spule (30) eine axiale Hochdruckturbine (36) beinhaltet, und das Düsensystem (64) die Luft zu der axialen Hochdruckturbine leitet.

5. System nach einem der vorhergehenden Ansprüche, wobei die niedrige Spule (40) einen Leistungsturbinenmotor (42) beinhaltet.

6. System nach Anspruch 5, wobei der Leistungsturbinenrotor (42) eine Ausgangswelle (44) antreibt.

7. System nach einem der vorhergehenden Ansprüche, ferner ein Zubehörsystem (70) umfassend, das von der niedrigen Spule angetrieben wird.

8. System nach einem der vorhergehenden Ansprüche, wobei das Düsensystem (64) innerhalb einer Triebwerksgehäusestruktur (28) montiert ist.

9. System nach Anspruch 8, wobei das Düsensystem (64) mindestens teilweise um eine Triebwerksrotationsachse (X) angeordnet ist.

10. Verfahren zum Starten eines Gasturbinentriebwerksystems nach Anspruch 1 mit einer hohen Spule (30) und einer niedrigen Spule (40), Folgendes umfassend:
Versorgen eines Düsensystems (64) in einer Triebwerksgehäusestruktur (28) eines Modulpakets mit Luft, um die hohe Spule bis zu einer Anspringgeschwindigkeit aufzuspulen, wobei das Düsensystem eine Vielzahl von Düsen beinhaltet, die in Umfangsrichtung um die hohe Spule beabstandet sind, wobei die Vielzahl von Düsen in eine gewünschte Rotationsrichtung der hohen Spule an einem Rotor (32, 34, 36) der hohen Spule ausgerichtet ist, um die hohe Spule aufzuspulen; und
Antreiben eines Zubehörsystems (70) nur mit der niedrigen Spule, sobald ein Anspringen erreicht ist; wobei die Vielzahl von Düsen vollständig um die Triebwerksgehäusestruktur (28) angeordnet ist.

11. Verfahren nach Anspruch 10, ferner ein Starten eines zweiten Modulpakets mit Crossbleed von dem Modulpaket umfassend, nachdem das Modulpaket einen Start abgeschlossen hat.

## Revendications

1. Système de propulsion de turbine à gaz comprenant :
un groupe moteur (END1, ENG2) avec une bobine haute (30) et une bobine basse (40) ; et
un système de démarrage (26) comprenant :
une source d'alimentation (60) qui génère de l'air ;
une structure de carter de moteur (28) ; et
un système de buse (64) dans la structure de carter de moteur en communication fluidique avec ladite source d'alimentation, ledit système de buse comportant une multitude de buses espacées circonférentiellement autour de la bobine haute et dirigées vers une direction souhaitée de la bobine haute au niveau d'un rotor (32, 34, 36) de la bobine haute pour faire tourner la bobine haute ; dans lequel la multitude de buses sont disposées complètement autour de la structure de carter moteur (28) ;
dans lequel ladite bobine haute (30) comporte un rotor de compresseur à écoulement axial (32), et ledit système de buse (64) dirige ledit air vers ledit rotor de compresseur à écoulement axial ; et
dans lequel ladite bobine haute (30) comporte un rotor de compresseur à écoulement centrifuge (34), et ledit système de buse (64) dirige ledit air vers ledit rotor de compresseur à écoulement centrifuge.

2. Système selon la revendication 1, dans lequel ladite source d'alimentation (60) est une unité d'alimentation auxiliaire.

3. Système selon la revendication 1, dans lequel ladite source d'alimentation (60) est une machine à cycle d'air électrique.

4. Système selon une quelconque revendication précédente, dans lequel ladite bobine haute (30) comporte une turbine axiale haute pression (36), et ledit système de buse (64) dirige ledit air vers ladite turbine axiale haute pression.

5. Système selon une quelconque revendication précédente, dans lequel ladite bobine basse (40) comporte un rotor de turbine de puissance (42).

6. Système selon la revendication 5, dans lequel ledit rotor de turbine de puissance (42) entraîne un arbre de sortie (44).

7. Système selon une quelconque revendication précédente, comprenant en outre un système accessoire (70) entraîné par ladite bobine basse.

8. Système selon une quelconque revendication précédente, dans lequel ledit système de buse (64) est monté à l'intérieur d'une structure de carter de moteur (28).

9. Système selon la revendication 8, dans lequel ledit système de buse (64) est disposé au moins partiellement autour d'un axe de rotation du moteur (X).

10. Procédé de démarrage d'un système de propulsion de turbine à gaz selon la revendication 1 avec une bobine haute (30) et une bobine basse (40) comprenant :
la fourniture d'air à un système de buse (64) dans une structure de carter de moteur (28) d'un groupe moteur pour faire tourner la bobine haute afin de démarrer la vitesse, dans lequel ledit système de buse comporte une multitude de buses espacées circonférentiellement autour de la bobine haute, la multitude de buses dirigées vers une direction de rotation souhaitée de la bobine haute au niveau d'un rotor (32, 34, 36) de la bobine haute pour faire tourner la bobine haute ; et
l'entraînement d'un système accessoire (70) avec uniquement la bobine basse une fois le démarrage terminé ; dans lequel la multitude de buses sont disposées complètement autour de la structure de carter moteur (28).

11. Procédé selon la revendication 10, comprenant en outre le démarrage d'un second groupe moteur avec écoulement croisé à partir du groupe moteur après le démarrage complet du groupe moteur.
